# EUROPÄISCHE PATENTSCHRIFT

(11) **EP 1 419 959 B1**
(45) Veröffentlichungstag und Bekanntmachung des Hinweises auf die Patenterteilung: **13.06.2007**
(21) Anmeldenummer: 03023065.0
(22) Anmeldetag: 14.10.2003
(51) Int. Cl.: B62D 65/02, B62D 43/10

(54) **Verfahren zur Herstellung einer Rohbaukarosserie und Rohbaukarosserie dazu**
Method for producing a vehicle body and vehicle body produced thereby
Procédé de fabrication d'une carrosserie et carrosserie ainsi obtenue

(30) Priorität: 12.11.2002 DE 10252473; 27.02.2003 DE 10308839; 11.09.2003 DE 10342343
(43) Veröffentlichungstag der Anmeldung: 19.05.2004
(73) Patentinhaber: Volkswagen AG, 38436 Wolfsburg (DE)
(72) Erfinder: Lohmann, Bernhard, Dipl.-Ing., 38518 Gifhorn (DE); Dang, Tran-Minh, Dipl.-Ing., 38440 Wolfsburg (DE); Lorenz, Heinrich, Dipl.-Ing., 38446 Wolfsburg (DE); Lem, Norbert, Dipl.-Ing., 38446 Wolfsburg (DE); Jäckel, Torsten, Dipl.-Ing., 38176 Wendeburg (DE)
(74) Vertreter: Scheffler, Jörg

(56) Entgegenhaltungen:
- DE-A- 3 011 428
- DE-A- 19 936 232
- GB-A- 2 363 593
- US-A1- 2001 020 796

## Beschreibung

Die Erfindung betrifft ein Verfahren zur Herstellung einer Rohbaukarosserie und ferner eine Rohbaukarosserie dazu für verschiedene Fahrzeug- respektive Modellvarianten.

Im Zuge einer zunehmenden ökologischen Betrachtung der Antriebstechniken von Kraftfahrzeugen, insbesondere der Analyse des Schadstoffausstoßes von Verbrennungsmotoren, sind bereits umfangreiche Maßnahmen vorgeschlagen worden, um denselben weitestmöglich zu verringern.

Für Dieselfahrzeuge wird z. B. vorgeschlagen, dem Treibstoff (Diesel) ein so genanntes Additiv beizufügen, um u. a. Ablagerungen an der Einspritzpumpe und der Einspritzdüse zu entfernen bzw. das gesamte Kraftstoffsystem zuverlässig vor Korrosion zu schützen. Des Weiteren wurde gefunden, dass solche Additive die Starteigenschaften verbessern, den Russanteil im Abgas durch verbesserte Zündfähigkeit des Treibstoffes reduzieren und schließlich auch eine verbesserte Schmierwirkung hervorrufen. Derartige Additive werden dem Tankinhalt direkt beigegeben oder in Behältern am Fahrzeug gespeichert und dem Kraftstoffsystem definiert zugeführt.

Bezogen auf benzinbetriebene Fahrzeuge existieren in bestimmten Ländern, wie beispielsweise in den USA, bereits strenge Gesetzgebungen bezüglich der Kohlenwasserstoffemission. Um diesen gesetzgeberischen Anforderungen gerecht zu werden und auf solchen Märkten auch in Zukunft präsent sein zu können, ist es für die Hersteller von Kraftfahrzeugen angezeigt, sich im Kraftstofftank oder an anderer Stelle bildende Kohlenwasserstoffdämpfe abzusaugen bzw. aufzufangen, einem an sich bekannten Aktiv-Kohle-Filter (AKF) zuzuführen und in demselben zu sammeln sowie ggf. nachfolgend die Dämpfe respektive den gesammelten Kraftstoff dem Verbrennungsprozess des Antriebs zur Verfügung zu stellen. Solch ein Aktiv-Kohle-Filter besteht vorzugsweise aus einem Kunststoffbehälter, der seinerseits mit einem Granulat aus Aktiv-Kohle gefüllt ist.

In der Praxis zeichnet es sich des Weiteren zunehmend ab, diverse Einbauten, welches Zusatzaggregate, -einrichtungen und Behälter, wie Luftfilter, Zusatz-Stromversorgungsanlagen, Kraftstoff- und Aktiv-Kohle-Filter-Behälter u. ä. sein können, in bisher ungenutzten Hohlräumen der Kraftfahrzeugkarosserie, wie dem von der Radschüssel des Reserverades gebildeten Hohlraum innerhalb einer an sich bekannten Reserveradmulde, anzuordnen (FR 1.033.383; FR 1.250.283; DE 38 05 711 A1; DE 38 43 673 A1). Im Wesentlichen wird dabei die Reserveradmulde im Bereich der besagten Radschüssel durch beispielsweise Tiefziehen topfartig eingezogen und von unten her der Hohlraum entsprechend bestückt.

Ebenso ist es aus der EP 0 270 097 B1 bekannt, den hinteren Boden samt zugehöriger Aussparungen für ein Reserverad (Reserveradmulde) und einen Kraftstofftank als gesondertes Modul zu fertigen und in die Kraftfahrzeugkarosserie einzubinden.

Aufgrund der vielseitigen Fahrzeugmodelle und -ausstattungen, die heute ein Hersteller bereitstellt, wozu ggf. auch Fahrzeuge gehören, die keinen topfartigen Einzug in der Reserveradmulde aufweisen, da beispielsweise Zusatzeinrichtungen- und -aggregate, wie Aktiv-Kohle-Filter-Behälter o. ä. nicht gewünscht sind, wird während der Herstellung des Fahrzeugs, insbesondere die Rohbauplattform-Hinterwagen verfahrensgemäß sehr früh und insbesondere als Einzelteil gesteuert. Durch diese erforderlichen und im aktuellen Verfahrensprozess sehr früh zu berücksichtigenden Steuerungskriterien, ist ein erheblicher Mehraufwand an Arbeitszeit und Kosten zu verzeichnen.

Es ist auch bereits bekannt, die Karosserieblechelemente zum wirksamen Schutz gegen Korrosion zu verzinken und anschließend aus den Karosserieblechelementen aufgebaute Rohbaukarosserie mit einer Lackierung zu versehen. Hierdurch wird ein dauerhafter Schutz gegen eine Schädigung des Karosserieblechelementes dadurch erreicht, dass sich die Zinkschicht als der chemisch unedlere Reaktionspartner in einem Oxidationsprozess zersetzt und so das Karosserieblechelement nicht angegriffen wird. Die Zinkschicht wird auf der Karosserieblechelementoberfläche beispielsweise mittels Gleichspannungselektrolyse galvanisch erzeugt.

Der Korrosionsschutz einer verzinkten Oberfläche ist allerdings dann nicht gewährleistet, wenn diese unterbrochen ist oder lediglich abschnittsweise aufgetragen wurde. Diese Voraussetzung bedingt daher einen flächigen Schichtauftrag über die gesamte Karosserieoberfläche. Strukturelle Änderungen an der bereits verzinkten und lackierten Karosserie, insbesondere nachträglich eingebrachte Ausschnitte, führen daher in der Praxis zu einem erheblichen Nacharbeitungsaufwand, um an den Trennflächen der Ausschnitte den gewünschten Korrosionsschutz sicher zu stellen.

Zum Einbringen von Ausschnitten in Karosserieblechelementen sind in der Praxis bereits eine Vielzahl unterschiedlicher Verfahren bekannt, wobei sich insbesondere Laserschneidverfahren aufgrund der örtlich begrenzten thermischen Einflusszone als zweckmäßig erwiesen haben.

Die DE 195 06 768 A1 beschreibt bereits ein Laserstrahlschneidverfahren für verzinkte Bleche, bei welchem in einem ersten Verfahrensschritt die Zinkschicht mittels eines Laserstrahls einer vorbestimmten Energiedichte entfernt wird und in einem zweiten Verfahrensschritt die Energiedichte des Laserstrahls zum Schneiden des Werkstückes entsprechend geändert wird.

Die DE 199 36 232 A1 offenbart auch bereits ein Verfahren zum Ausschneiden von Formteilen aus einer mit Lack beschichteten Metallplatte mittels eines Laserstrahls, wobei der Laserstrahl auf die von der Lackschicht abgewandte Seite der Metallplatte gerichtet wird. Auf diese Weise sollen optisch ansprechende Oberflächen realisiert werden, ohne dass dabei Ausschuss produziert würde und ohne dass hierzu eine kostenintensive und zeitaufwendige visuelle Kontrolle oder Nacharbeit erforderlich ist.

Weiterhin offenbart auch die JP 10-15 682 ein Verfahren zum Laserschneiden von beschichteten grundierten Blechen, bei dem zwei Laserstrahlen unterschiedlicher Intensitäten eingesetzt werden. Der erste Laserstrahl mit geringerer Intensität entfernt die Grundierung und der zweite Laserstrahl mit der größeren Intensität schneidet anschließend das Blech. Beide Laserstrahlen werden hierzu simultan bewegt.

Nach der JP 6-304 773 ist weiterhin ein Laserschneidverfahren von beschichteten Blechen bekannt, bei welchem zunächst die Beschichtung mittels eines Laserstrahls entfernt wird und anschließend das Blech mittels eines Laserstrahls geschnitten wird. Hierdurch wird die Oberflächenbeschaffenheit der Schnittfläche verbessert.

In der DE 195 44 508 A1 wird das Laserschneiden von verzinkten Blechen, wie sie beispielsweise in der Automobilindustrie verwendet werden, einschließlich der wesentlichen Einflussfaktoren ausführlich dargestellt. Dabei wird ein Schneidgas eingesetzt, welches aus einer Mischung von 1 % bis 10 % Sauerstoff und einem träge reagierenden oder inerten Gas eingesetzt wird. Hierdurch wird eine gute Schnittqualität an den geschnittenen Kanten erreicht.

Eine gattungsgemäßes Verfahren zur Herstellung einer Rohbaukarosserie für verschiedene Fahrzeug- respektive Modellvarianten sowie eine dementsprechende Rohbaukarosserie ist beispielsweise auch durch die US 2001/020796 A1 bekannt. Dabei werden wesentliche Längs- und Querträgerelemente zu einer Rohbauplattform-Hinterwagen zusammengesetzt und mit einem Bodenblech mit Reserveradmulde ausgestattet, die zu der Rohbaukarosserie verbunden wird. Hierzu ist dem Bodenblech eine umfangsseitig offene Vertiefung angeformt. Begrenzt wird die Vertiefung durch ein separates Wandelement eines Querträgerelementes.

Aufgabe der Erfindung ist es ein Verfahren zur Herstellung einer Rohbaukarosserie für verschiedene Fahrzeug- respektive Modellvarianten anzugeben, nach welchem diese Varianten mit geringstem Aufwand gefertigt werden können oder zumindest die hierzu erforderlichen Steuerungskriterien verfahrensgemäß vereinfacht werden können. Aufgabe der Erfindung ist es ferner, eine Rohbaukarosserie zu schaffen, die nach dem erfindungsgemäßen Verfahren herstellbar ist.

Erfindungsgemäß wird die Aufgabe in Verbindung mit den Merkmalen im Oberbegriff des Anspruchs 1 derart gelöst, dass die Rohbauplattform-Hinterwagen zunächst mit einer Reserveradmulde mit geschlossenem Muldengrund und einer darauf fest angeordneten Reserveradaufnahme ausgebildet wird und im Falle der beabsichtigten Verwendung der Rohbaukarosserie für Fahrzeuge mit Einbauten im Muldengrund im Anschluss an die Fertigstellung der Rohbaukarosserie, ggf. mit Lackierung, der Muldengrund der Reserveradmulde im Bereich der Radschüssel des Reserverades mit einem Ausschnitt versehen und nachfolgend denselben abdeckend ein nach unten offener Einsatztopf mit einer oben liegenden Reserveradaufnahme am Muldengrund befestigt wird.

Gemäß einer zweiten bevorzugten Weiterbildungsvariante wird die Rohbauplattform-Hinterwagen zunächst mit einer Reserveradmulde ausgebildet, deren Muldengrund im Bereich der Radschüssel des Reserverades einen Ausschnitt aufweist, wobei
- im Falle der beabsichtigten Verwendung der Rohbaukarosserie für Fahrzeuge ohne Einbauten im Muldengrund im Anschluss an die Fertigstellung der Rohbaukarosserie, ggf. mit Lackierung, ein den Ausschnitt abdeckendes Flächenelement mit einer oben liegenden Reserveradaufnahme am Muldengrund befestigt wird und
- im Falle der beabsichtigten Verwendung der Rohbaukarosserie für Fahrzeuge mit Einbauten im Muldengrund im Anschluss an die Fertigstellung der Rohbaukarosserie, ggf. mit Lackierung, ein den Ausschnitt abdeckender nach unten offener Einsatztopf mit einer oben liegenden Reserveradaufnahme am Muldengrund befestigt wird.

In einer Fortbildung des erfindungsgemäßen Verfahrens wird der Ausschnitt im Muldengrund der Reserveradmulde mittels einer Laser-Schneideinrichtung realisiert.
Fernerhin wird vorgeschlagen, dass das Flächenelement oder der Einsatztopf mit dem Muldengrund der Reserveradmulde verschweiß, verklebt und/oder mittels mechanischer Verbindungsmittel fest verbunden wird.

Des Weiteren wird vorgeschlagen, dass in den am Muldengrund befestigten Einsatztopf in einem nachfolgenden Verfahrensschritt ein Additiv- oder Aktiv-Kohle-Filter-Behälter (AKF-Behälter) eingebaut wird. Ebenso besteht auch die Möglichkeit, dass ein Einsatztopf verwendet wird, der seinerseits als Einbaumodul vorab mit einem Additiv- oder AKF-Behälter bestückt wurde. Schließlich kann es auch angezeigt sein, dass als Einsatztopf ein Einbaumodul in Form eines entsprechend ausgebildeten und voll ausgestatteten Additiv- oder AKF-Behälters verwendet wird, der seinerseits mit einer oben liegenden Reserveradaufnahme versehen ist oder wird.

Nach einer weiteren besonders Erfolg versprechenden Ausgestaltung ist bei dem Verfahren vorgesehen, dass die Rohbaukarosserie vor der Lackierung verzinkt wird und an der Rohbaukarosserie zumindest ein Ausschnitt mittels eines Laserschneidverfahrens eingebracht wird, wobei die Parameter in Abhängigkeit der Materialeigenschaften der Lackierung derart bestimmt werden, dass die Wärmeeinflusszone unterhalb eines für an den Ausschnitt angrenzende Bereiche der Lackierung schädigenden Schwellwertes liegen. Diese Ausgestaltung geht dabei einerseits von der Erkenntnis aus, dass ein ergänzender Korrosionsschutz an den Flanken des Ausschnittes dann nicht erforderlich ist, wenn der Abstand zwischen der ungeschützten Schnittfläche und der Zinkschicht relativ gering ist, insbesondere wenige Millimeter nicht übersteigt. Andererseits wird dabei zugleich eine insbesondere ohne weiteres visuell wahrnehmbare Beeinträchtigung der Lackfläche vermieden, wenn der durch die Parameter bestimmte Energieeintrag auf ein für die angrenzenden Lackflächen unschädliches Maß reduziert wird. Überraschend wurde gefunden, dass der derart reduzierte Energieeintrag dennoch eine zuverlässige Durchbrechung der Rohbaukarosserie erlaubt, so dass die derart mit dem Ausschnitt versehene Rohbaukarosserie keinerlei Nachbearbeitung erfordert. Hierdurch können an verzinkten und bereits lackierten Rohbaukarosserien auch zu einem späteren Zeitpunkt strukturelle Änderungen vorgenommen werden, ohne dass ein wesentlicher, zusätzlicher technischer Aufwand entsteht. Auf diese Weise wird es beispielsweise möglich, nachträglich Ausschnitte für die Reserveradmulde, ein Schiebedach, Dachreling oder für rechtsgesteuerte Fahrzeuge anzubringen. Ein bereits im Montageprozess befindliches Fahrzeug mit einem bestimmten Anforderungs- und Merkmalsprofil kann daher flexibel bis zur Endmontage im Rahmen der bis dahin realisierten, unveränderlichen Merkmale, beispielsweise die Lackfarbe, das Anforderungs- und Merkmalsprofil eines anderen Fahrzeuges erhalten, und dieses ersetzen. Kurzfristige Änderungen durch den Kunden sind daher ebenso möglich wie eine nach fertigungstechnischen Gesichtspunkten geänderte Fertigungsfolge. Beispielsweise können daher Fixierungen einen mittels des Laserstrahls eingebrachten Ausschnitt in der Karosserie sowie in weiteren Bauelementen durchdringen und dadurch exakt positioniert werden.

Dabei erweist sich eine Abwandlung des Verfahrens als besonders vorteilhaft, bei der die Rohbaukarosserie im Bereich des zumindest einen Ausschnittes partiell umgeformt wird. Hierdurch wird es möglich, die Formgebung und Gestaltung der Rohbaukarosserie zu ändern, so dass die Lackierung nicht mehr wie bisher üblich im Anschluss an den Rohbau, sondern bereits frühzeitig erfolgen kann und dennoch einen weiten Spielraum im Hinblick auf formgebende Änderungen gestattet. Fixierungen können dadurch bedarfsweise realisiert werden.

Das Verfahren kann prinzipiell bei jeder Art einer dauerhaften Beschichtung oder Lackierung angewendet werden. Besonders Erfolg versprechend ist hingegen eine Abwandlung, bei der das Laserschneidverfahren im Anschluss an das Aufbringen einer Endlackschicht durchgeführt wird. Hierdurch können strukturelle Eingriffe bedarfsweise in Abhängigkeit anderer, erst gegen Ende des Herstellungsprozesses realisierter Merkmale erfolgen. Auf diese Weise können Rohbautoleranzen für einen Betrachter ohne wahrnehmbare Maßabweichungen ausgeglichen werden. Beispielsweise kann die Positionierung einer Dachantenne exakt zentriert zwischen den Seitenteilen erfolgen.

Durch das erfindungsgemäße Verfahren wird die Ausstrahlungswirkung benachbarter Zinkschichten genutzt, so dass in besonders vorteilhafter Weise der Ausschnitt zur Fixierung von Bauelementen ohne eine weitere Bearbeitung der Schnittfläche verwendet werden kann. Hierdurch können Ausschnitte mit hoher Genauigkeit eingebraucht werden, ohne dass zugleich unerwünschte Einflüsse nachfolgender Verfahrensschritte zu befürchten sind.

Das erfindungsgemäße Verfahren könnte mittels handgeführter Vorrichtungen durchgeführt werden. Besonders vorteilhaft ist jedoch eine Variante des Verfahrens, bei dem das Laserschneidverfahren automatisiert durchgeführt wird, um so eine verzögerungsfreie Änderung technischer Merkmale aufgrund des geänderten Steuerungsprogrammes des Kraftfahrzeuges insbesondere ohne einen manuellen Eingriff durchführen zu können.

Man könnte daran denken, das Verfahren derart einzusetzen, dass die Lackschicht aufgrund der Laserstrahlung fließfähig wird und dadurch der Schwerkraft folgend die Schnittfläche überdeckt. Besonders praxisnah ist hingegen eine Weiterbildung der Erfindung, bei der ein Lasersublimierverfahren eingesetzt wird. Hierdurch wird die Lackschicht im Bereich des Ausschnittes rückstandsfrei entfernt, wodurch die Prozesssicherheit bei der Durchführung des Verfahrens erhöht wird.

Weiterhin erweist sich eine Ausgestaltung als besonders zweckmäßig, wenn ein Laserstrahl mit einem Laserfokusdurchmesser kleiner als 300µm und mit einer Strahlqualität von mindestens 12mm*mrad eingesetzt wird, um so aufgrund der Laserstrahleigenschaften einen unerwünschten Einfluss auf benachbarte Bereiche der Lackfläche weitgehend zu vermeiden.

Die Schnittqualität kann zudem mit Hilfe einer weiteren besonders günstigen Weiterentwicklung des Verfahrens realisiert werden, wenn der Bearbeitungszone während der Laserschneidbearbeitung ein Inertgas zugeführt wird. Hierdurch wird die Qualität der Schnittfläche wesentlich verbessert. Zugleich kann die Bearbeitungszone lokal exakt auf eine sehr geringe Fläche begrenzt werden, wobei zudem eine Kühlung der benachbarten Lackflächen erreicht werden kann.

Die Rohbaukarosserie zeichnet sich ihrerseits in Verbindung mit den Merkmalen im Oberbegriff des Anspruchs 19 dadurch aus, dass auf dem Muldengrund der Reserveradmulde im Bereich der Radschüssel des Reserverades ein Ausschnitt eingebracht ist, dem ein denselben abdeckendes Flächenelement mit einer oben liegenden Reserveradaufnahme oder ein nach unten offener Einsatztopf mit einer oben liegenden Reserveradaufnahme zugeordnet ist.

Das Flächenelement oder der Einsatztopf kann hierbei mit dem Muldengrund der Reserveradmulde verschweiß, verklebt und/oder mittels mechanischer Verbindungsmittel fest verbunden sein.

Weiterhin wird als erfindungsgemäß angesehen, dass der Einsatztopf mit Mitteln zur Befestigung eines Additiv- oder AKF-Behälters versehen ist.

Zweckmäßigerweise kann der Einsatztopf auch ein Einbaumodul in Form eines entsprechend ausgebildeten und voll ausgestatteten Additiv- oder AKF-Behälters sein, der seinerseits eine oben liegende Reserveradaufnahme aufweist. Schließlich ist vorgesehen, dass der Ausschnitt im Muldengrund entweder nachträglich in einem anfangs geschlossenen Muldengrund mittels einer Laser-Schneideinrichtung realisiert oder der Muldengrund bereits mit einem Ausschnitt bereitgestellt ist.

Als wesentlicher Vorteil vorstehender Erfindung wird gesehen, dass anfangs für sämtliche Fahrzeug- respektive Modellvarianten eine einheitliche Rohbauplattform-Hinterwagen erzeugt werden kann, die bei Bedarf erst sehr spät im Verfahrensprozess, beispielsweise in verschiedenen Montagelinien oder -werken, an beispielsweise die gewählte Antriebsart des Kraftfahrzeugs und/oder den beabsichtigten Vertriebsmarkt angepasst wird, woraus im Ergebnis keine oder lediglich geringste Aufwendungen in Verbindung mit der Steuerung der Rohbauplattform-Hinterwagen im Verfahrensprozess zu verzeichnen sind.

Die Erfindung wird nachstehend anhand der in den Zeichnungen schematisch dargestellten Ausführungsbeispiele näher erläutert. Es zeigen:
- Figur 1: die verfahrensgemäße Ausgangssituation bezüglich der Ausbildung der Reserveradmulde im Bodenblech einer Rohbauplattform-Hinten einer Rohbaukarosserie gemäß einer ersten bevorzugten Variante (geschlossener Muldengrund),
- Figur 2: die Ausbildung der Reserveradmulde nach Fig. 1 nach einem sich anschließenden Bearbeitungsschritt bzw. die verfahrensgemäße Ausgangssituation bezüglich der Ausbildung der Reserveradmulde im Bodenblech einer Rohbauplattform-Hinten einer Rohbaukarosserie gemäß einer weiteren bevorzugten Variante (ausgeschnittener Muldengrund),
- Figur 3: die Reserveradmulde nach Fig. 2 in einer ersten Ausgestaltung mit einem den Ausschnitt abdeckenden Flächenelement,
- Figur 4: die Reserveradmulde nach Fig. 2 in einer zweiten weiteren Ausgestaltung mit einem den Ausschnitt abdeckenden Einsatztopf,
- Figur 5: der Einsatztopf nach Fig. 4 in einer weiteren möglichen Ausführungsform,
- Figur 6: die Einzelheit "Z" nach Fig. 4,
- Figur 7: eine dritte mögliche Ausführungsform des Einsatztopfes,
- Figur 8: eine vor der Lackierung verzinkte Rohbaukarosserie.

Wie oben bereits dargetan, wird aufgrund der vielseitigen Fahrzeugmodelle und - ausstattungen, die heute ein Hersteller bereitstellt, derzeit die Rohbauplattform-Hinterwagen verfahrensgemäß sehr früh und insbesondere als Einzelteil gesteuert, wodurch ein zusätzlicher erheblicher Zeit- und Kostenaufwand zu verzeichnen ist.

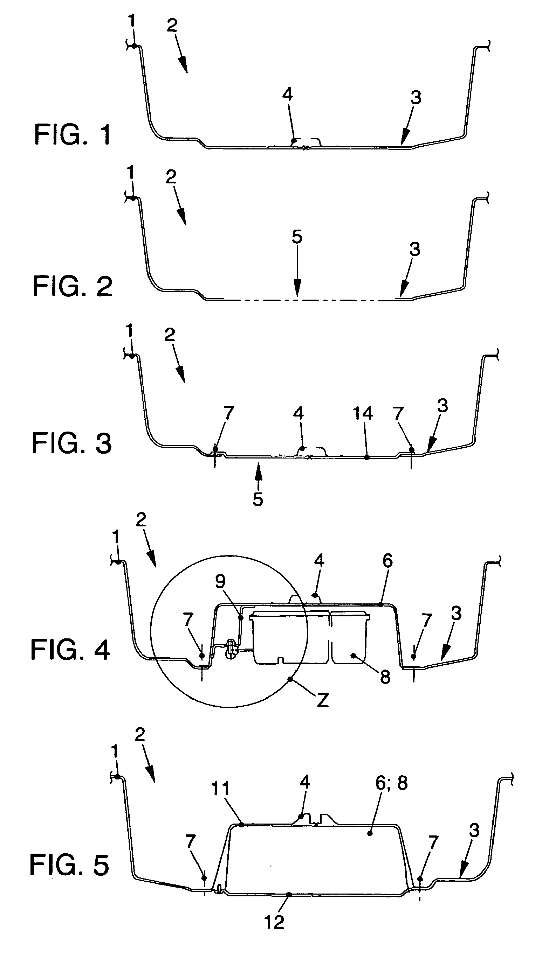

Um diesem Nachteil effektiv zu begegnen, wird nunmehr vorgeschlagen, erfindungsgemäß "erst" nach Fertigstellung der Rohbaukarosserie oder Fertigstellung der Rohbaukarosserie und Lackierung derselben die Rohbauplattform-Hinterwagen mit der im Bodenblech 1 integrierten und an sich bekannten Reserveradmulde 2 (Fig. 1) als Bestandteil der Rohbaukarosserie bei Bedarf an die gewählte Fahrzeug- respektive Modellvariante entsprechend anzupassen. Eine solche Fahrzeug- respektive Modellvariante kann u. a. durch die Antriebsart und/oder den beabsichtigten Vertriebsmarkt des Fahrzeugs gekennzeichnet sein, woraus beispielsweise Einbauten in der an sich bekannten Reserveradmulde 2 der Rohbauplattform-Hinterwagen resultieren.

Gemäß einer ersten Weiterbildungsvariante des erfindungsgemäßen Verfahrens wird zunächst die Rohbauplattform-Hinterwagen mit einer Reserveradmulde 2 mit geschlossenem Muldengrund 3 und einer darauf fest angeordneten Reserveradaufnahme 4 ausgebildet und mit den übrigen an sich bekannten und nicht näher dargestellten Karosseriebauteilen fest verbunden.

Gesetzt den Fall, es ist beabsichtigt, die Rohbaukarosserie für Fahrzeuge mit Einbauten im Muldengrund 3 zu verwenden, wird im Anschluss an die Fertigstellung der Rohbaukarosserie, welches ggf. mit der Lackierung derselben einhergeht, der Muldengrund 3 der Reserveradmulde 2 im Bereich der Radschüssel des nicht näher dargestellten Reserverades mit einem Ausschnitt 5 (Fig. 2) versehen. Dieser Ausschnitt 5 kann vorteilhaft mit einer an sich bekannten und nicht näher dargestellten Laser-Schneideinrichtung realisiert werden, da in diesem Fall der Wärmeeintrag in das Werkstück und die Verschmutzung desselben als äußerst gering zu bewerten ist, welches sich insbesondere bei bereits lackierten Rohbaukarosserien positiv auswirkt. Ferner können durch diese vorgeschlagene Maßnahme exakte Ausschnittkonturen erstellt werden, die keiner oder sehr geringer Nacharbeit der Schnittflächen bedürfen. Selbstverständlich können jedoch jedwede anderen an sich bekannten Verfahren und Vorrichtungen zum Ausschneiden des Muldengrundes 3 verwendet werden und sind durch diese Erfindung mit erfasst.

Nachfolgend wird am Muldengrund 3, den Ausschnitt 5 abdeckend, ein so genannter nach unten offener Einsatztopf 6 mit einer oben liegenden Reserveradaufnahme 4 befestigt (Fig. 4). Dieser Einsatztopf 6 kann sowohl aus Stahlblech als auch aus Kunststoff gefertigt sein, woraus die unterschiedlichsten Befestigungsmöglichkeiten am Bodenblech 1 respektive Muldengrund 3, der ebenfalls aus Stahlblech oder Kunststoff bestehen kann, resultieren.
Als geeignete Fügeverfahren bieten sich insbesondere das Schweißen und Kleben an. Selbstverständlich können auch an sich bekannte und nicht näher dargestellte mechanische Verbindungsmittel 7, wie Schrauben, Niete oder Clinche, zur Anwendung kommen. An dem Einsatztopf 6 ist zweckmäßigerweise die Reserveradaufnahme 4 fest angeordnet.

Gemäß einem weiteren Verfahrensschritt werden nunmehr in den am Muldengrund 3 befestigten Einsatztopf 6 die gewählten Einbauten integriert, welches vorliegend entweder ein Additiv-Behälter für ein Dieselfahrzeug oder ein Aktiv-Kohle-Filter-Behälter (AKF-Behälter) 8 für ein benzinbetriebenes Fahrzeug ist, wobei sich die Erfindung jedoch nicht auf diese gewählte Art der Einbauten beschränkt.

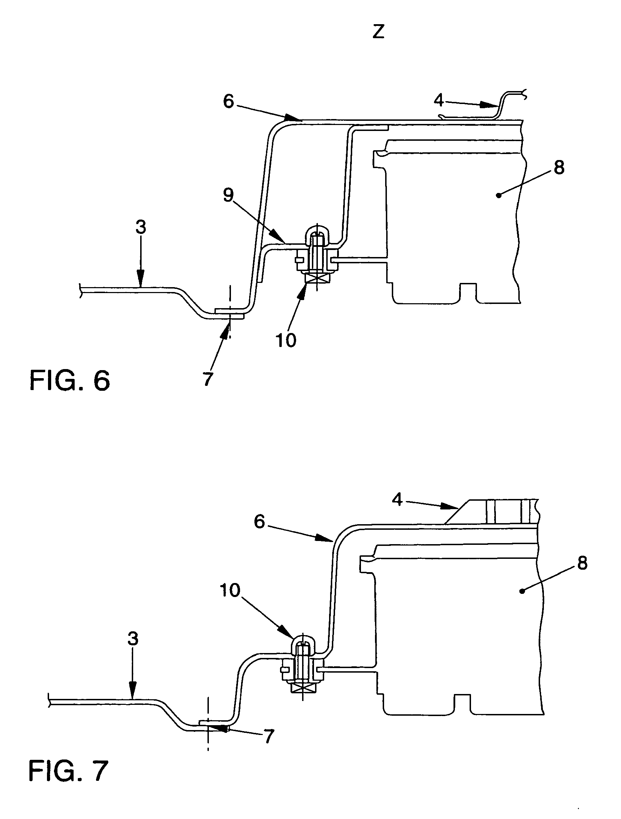

Der Einsatztopf 6 verfügt dabei über Mittel zur Befestigung des Additiv- oder AKF-Behälters 8, gem. Fig. 4 und 6 über wenigstens zwei, vorzugsweise drei Befestigungsböcke 9, die aus Metall oder Kunststoff gefertigt, an der Innenkontur des Einsatztopfes 6 befestigt, beispielsweise angeschweißt oder angeklebt sind. An diesen Befestigungsböcken 9 respektive deren Befestigungspunkten 10 stützt sich dann der Additiv- oder AKF-Behälter 8 ab und ist mit diesen fest, jedoch lösbar verbunden. Ebenso ist es denkbar, den Einsatztopf 6 unter Verzicht auf gesonderte Befestigungsböcke 9 so auszubilden, dass sich der Additiv- oder AKF-Behälter 8 direkt am Einsatztopf 6 an integrierten Befestigungspunkten 10 abstützt (Fig. 7).

Was den Einsatztopf 6 an sich anbelangt, kann derselbe auch vorab mit den Einbauten, vorliegend einem Additiv- oder einem AKF-Behälter 8, bestückt werden und als so genanntes Einbaumodul Verwendung finden. Gleichfalls besteht die Möglichkeit, als Einsatztopf 6 ein Einbaumodul in Form eines entsprechend ausgebildeten und voll ausgestatteten Additiv- oder AKF-Behälters 8 zu verwenden, der seinerseits mit der oben liegenden Reserveradaufnahme 4 versehen ist oder wird. Fig. 5 zeigt ein solches Einbaumodul, wobei der Additiv- oder AKF-Behälter 8 aus einer Oberschale 11 und einer Unterschale 12 besteht. Die Oberschale 11 ist vorliegend mittels eines Flansches 13 in bereits oben beschriebener Art und Weise fest am Muldengrund 3 befestigt, wobei die Unterschale 12 den von der Oberschale 11 umschlossene Hohlraum nach unten hin abdichtet und ihrerseits direkt an die Oberschale 11 angeschlossen ist.

Aus Gründen der Bauteilereduzierung bietet es sich an, in die Kontur des Einsatztopfes 6 oder des Einbaumoduls, vorliegend in Form des Additiv- oder AKF-Behälters 8, bereits die Reserveradaufnahme 4 zu integrieren, wozu sich Einsatztöpfe 6 und besagte Module aus Kunststoff besonders eignen (Fig. 5).

Die zweite Weiterbildungsvariante des beanspruchten Verfahrens zur Herstellung einer Rohbaukarosserie unterscheidet sich zur vorstehenden lediglich dadurch, dass diese von einer Reserveradmulde 2 ausgeht, deren Muldengrund 3 im Bereich der Radschüssel des Reserverades bereits einen Ausschnitt 5 aufweist, der seinerseits beispielsweise bereits vorab, d. h., während der Herstellung des Bodenbleches 1 an sich erstellt wurde.

Im Falle der beabsichtigten Verwendung der Rohbaukarosserie für Fahrzeuge ohne Einbauten im Muldengrund 3 wird erfindungsgemäß ein den Ausschnitt 5 abdeckendes vorgefertigtes Flächenelement 14 mit einer oben liegenden Reserveradaufnahme 4 am Muldengrund 3 befestigt, wobei sich hier ebenfalls in Abhängigkeit vom verwendeten Werkstoff eine Schweißung oder Klebung und/oder mechanische Verbindungsmittel anbieten (Fig. 3).

Ist es dagegen beabsichtigt, die Rohbaukarosserie für Fahrzeuge mit Einbauten im Muldengrund 3 zu verwenden, kommt statt des Flächenelementes 14 der oben ausführlich beschriebene Einsatztopf 6 für einen Additiv- oder AKF-Behälter 8 zur Anwendung.

Hingegen weist eine weitere Rohbaukarosserie mehrere einzelne Karosserieblechelemente 21 mit jeweils außenseitig einer kathodisch aufgetragenen Zinkschicht 22, 23 auf, deren außenseitige Fläche zusätzlich mit einem Füller 24 und zwei Lackschichten 25, 26 versehen ist. An dem derart mit den Zinkschichten 22, 23 und den Lackschichten 25, 26 versehenen Karosserieblechelement 21 wird mittels eines Laserstrahls 27 ein Ausschnitt 28 eingebracht. Die Parameter bei der Laserstrahlbearbeitung werden dabei derart in Abhängigkeit der Materialeigenschaften der Lackschichten 25, 26 bestimmt, dass eine vergrößert dargestellte Wärmeeinflusszone 29 unterhalb eines für an den Ausschnitt 28 angrenzende Randbereiche 30, 31 der Lackschichten 25, 26 schädigenden Schwellwertes liegen. Hierdurch kann ein Ausschnitt 28 ohne eine Nachbearbeitung des Karosserieblechelementes 21 realisiert werden, weil weder das visuell wahrnehmbare äußere Erscheinungsbild der Lackschichten 25, 26 noch die korrosionsschützende Wirkung der Zinkschichten 22, 23 beeinträchtigt werden (Fig. 8).

## Patentansprüche

1. Verfahren zur Herstellung einer Rohbaukarosserie für verschiedene Fahrzeug- respektive Modellvarianten, bei dem nach Fertigstellung der Rohbaukarosserie und Lackierung derselben die Rohbaukarosserie bei Bedarf an die gewählte Fahrzeug- respektive Modellvariante entsprechend angepasst wird, indem im wesentlichen Längs- und Querträgerelemente zu einer Rohbauplattform-Hinterwagen zusammengesetzt und mit einem Bodenblech mit Reserveradmulde ausgestattet werden und nachfolgend die besagte Rohbauplattform-Hinterwagen mit weiteren an sich bekannten Karosseriebauteilen zu der Rohbaukarosserie fest verbunden wird, wobei nach Fertigstellung der Rohbaukarosserie oder Fertigstellung der Rohbaukarosserie und Lackierung derselben die Rohbauplattform-Hinterwagen bei Bedarf an die gewählte Fahrzeug- respektive Modellvariante entsprechend angepasst wird, **dadurch gekennzeichnet, dass** die Rohbauplattform-Hinterwagen zunächst mit einer Reserveradmulde (2) mit geschlossenem Muldengrund (3) und einer darauf fest angeordneten Reserveradaufnahme (4) ausgebildet wird und im Falle der beabsichtigten Verwendung der Rohbaukarosserie für Fahrzeuge mit Einbauten im Muldengrund (3) im Anschluss an die Fertigstellung der Rohbaukarosserie, ggf. mit Lackierung, der Muldengrund (3) der Reserveradmulde (2) im Bereich der Radschüssel des Reserverades mit einem Ausschnitt (5) versehen und nachfolgend denselben abdeckend ein nach unten offener Einsatztopf (6) mit einer oben liegenden Reserveradaufnahme (4) am Muldengrund (3) befestigt wird.

2. Verfahren nach Anspruch 1, **dadurch gekennzeichnet, dass** die Rohbauplattform-Hinterwagen zunächst mit einer Reserveradmulde (2) ausgebildet wird, deren Muldengrund (3) im Bereich der Radschüssel des Reserverades einen Ausschnitt (5) aufweist, wobei
- im Falle der beabsichtigten Verwendung der Rohbaukarosserie für Fahrzeuge ohne Einbauten im Muldengrund (3) im Anschluss an die Fertigstellung der Rohbaukarosserie, ggf. mit Lackierung, ein den Ausschnitt (5) abdeckendes Flächenelement (14) mit einer oben liegenden Reserveradaufnahme (4) am Muldengrund (3) befestigt wird und
- im Falle der beabsichtigten Verwendung der Rohbaukarosserie für Fahrzeuge mit Einbauten im Muldengrund im Anschluss an die Fertigstellung der Rohbaukarosserie, ggf. mit Lackierung, ein den Ausschnitt (5) abdeckender nach unten offener Einsatztopf (6) mit einer oben liegenden Reserveradaufnahme (4) am Muldengrund (3) befestigt wird.

3. Verfahren nach Anspruch 1, **dadurch gekennzeichnet, dass** der Ausschnitt (5) im Muldengrund (3) der Reserveradmulde (2) mittels einer Laser-Schneideinrichtung realisiert wird.

4. Verfahren nach einem der Ansprüche 1 und 2, **dadurch gekennzeichnet, dass** das Flächenelement (14) oder der Einsatztopf (6) mit dem Muldengrund (3) der Reserveradmulde (2) verschweiß, verklebt und/oder mittels mechanischer Verbindungsmittel (7) fest verbunden wird.

5. Verfahren nach einem der Ansprüche 1 bis 4, **dadurch gekennzeichnet, dass** in den am Muldengrund (3) befestigten Einsatztopf (6) in einem nachfolgenden Verfahrensschritt ein Additiv- oder Aktiv-Kohle-Filter-Behälter (AKF-Behälter) (8) eingebaut wird.

6. Verfahren nach einem der Ansprüche 1 bis 4, **dadurch gekennzeichnet, dass** ein Einsatztopf (6) verwendet wird, der seinerseits als Einbaumodul vorab mit einem Additiv- oder Aktiv-Kohle-Filter-Behälter (AKF-Behälter) (8) bestückt wurde.

7. Verfahren nach einem der Ansprüche 1 bis 4, **dadurch gekennzeichnet, dass** als Einsatztopf (6) ein Einbaumodul in Form eines entsprechend ausgebildeten und voll ausgestatteten Additiv- oder Aktiv-Kohle-Filter-Behälters (AKF-Behälters) (8) verwendet wird, der seinerseits mit einer oben liegenden Reserveradaufnahme (4) versehen ist oder wird.

8. Verfahren nach zumindest einem der vorangehenden Ansprüche, **dadurch gekennzeichnet, dass** die Rohbaukarosserie vor der Lackierung verzinkt wird und an der Rohbaukarosserie zumindest ein Ausschnitt mittels eines Laserschneidverfahrens eingebracht wird, wobei die Parameter in Abhängigkeit der Materialeigenschaften der Lackierung derart bestimmt werden, dass die Wärmeeinflusszone unterhalb eines für an den Ausschnitt angrenzende Bereiche der Lackierung schädigenden Schwellwertes liegen.

9. Verfahren nach Anspruch 8, **dadurch gekennzeichnet, dass** die Rohbaukarosserie im Bereich des zumindest einen Ausschnittes partiell umgeformt wird.

10. Verfahren nach den Ansprüchen 8 oder 9, **dadurch gekennzeichnet, dass** das Laserschneidverfahren im Anschluss an das Aufbringen einer Endlackschicht durchgeführt wird.

11. Verfahren nach zumindest einem der vorangehenden Ansprüche, **dadurch gekennzeichnet, dass** der Ausschnitt zur Fixierung von Bauelementen ohne eine weitere Bearbeitung der Schnittfläche verwendet werden kann.

12. Verfahren nach zumindest einem der vorangehenden Ansprüche, **dadurch gekennzeichnet, dass** das Laserschneidverfahren automatisiert durchgeführt wird.

13. Verfahren nach zumindest einem der vorangehenden Ansprüche, **dadurch gekennzeichnet, dass** ein Lasersublimierverfahren eingesetzt wird.

14. Verfahren nach zumindest einem der vorangehenden Ansprüche, **dadurch gekennzeichnet, dass** ein Laserstrahl mit einem Laserfokusdurchmesser kleiner als 300µm eingesetzt wird.

15. Verfahren nach zumindest einem der vorangehenden Ansprüche, **dadurch gekennzeichnet, dass** ein Laserstrahl mit einer Strahlqualität von mindestens 12mm*mrad eingesetzt wird.

16. Verfahren nach zumindest einem der vorangehenden Ansprüche, **dadurch gekennzeichnet, dass** der Bearbeitungszone während der Laserschneidbearbeitung ein Inertgas zugeführt wird.

17. Rohbaukarosserie für verschiedene Fahrzeug- respektive Modellvarianten, wobei im Wesentlichen Längs- und Querträgerelemente zu einer Rohbauplattform-Hinterwagen zusammengesetzt und mit einem Bodenblech mit Reserveradmulde ausgestattet werden und nachfolgend die besagte Rohbauplattform-Hinterwagen mit weiteren an sich bekannten Karosseriebauteilen zu der Rohbaukarosserie fest verbunden wird, **dadurch gekennzeichnet, dass** auf dem Muldengrund (3) der Reserveradmulde (2) im Bereich der Radschüssel des Reserverades ein Ausschnitt (5) eingebracht ist, dem ein denselben abdeckendes Flächenelement (14) mit einer oben liegenden Reserveradaufnahme (4) oder ein nach unten offener Einsatztopf (6) mit einer oben liegenden Reserveradaufnahme (4) zugeordnet ist.

18. Rohbaukarosserie nach Anspruch 17, **dadurch gekennzeichnet, dass** das Flächenelement (14) oder der Einsatztopf (6) mit dem Muldengrund (3) der Reserveradmulde (2) verschweißt, verklebt und/oder mittels mechanischer Verbindungsmittel (7) fest verbunden ist.

19. Rohbaukarosserie nach einem der Ansprüche 17 und 18, **dadurch gekennzeichnet, dass** der Einsatztopf (6) mit Mitteln zur Befestigung eines Additiv- oder Aktiv-Kohle-Filter-Behälters (AKF-Behälters) (8) versehen ist.

20. Rohbaukarosserie nach einem der Ansprüche 17 bis 19, **dadurch gekennzeichnet, dass** der Einsatztopf (6) ein Einbaumodul in Form eines entsprechend ausgebildeten und voll ausgestatteten Additiv- oder Aktiv-Kohle-Filter-Behälters (AKF-Behälters) (8) ist, der seinerseits eine oben liegende Reserveradaufnahme (4) aufweist.

21. Rohbaukarosserie nach einem der Ansprüche 17 bis 20, **dadurch gekennzeichnet, dass** der Ausschnitt (5) entweder nachträglich in einem anfangs geschlossenen Muldengrund (3) mittels einer Laser-Schneideinrichtung realisiert oder der Muldengrund (3) bereits mit einem Ausschnitt (5) bereitgestellt ist.

## Claims

1. Method for manufacturing a shell bodywork for various vehicle or model variants respectively, wherein, after production of the shell bodywork and painting thereof, the shell bodywork is accordingly adapted as required to the chosen vehicle or model variant respectively, in that substantially longitudinal and transverse bearer elements are combined to form a shell platform rear carriage and equipped with a floor panel comprising a spare-wheel well and the aforementioned shell platform rear carriage is subsequently rigidly connected to further bodywork components known per se to form the shell bodywork, the shell platform rear carriage being accordingly adapted as required, after production of the shell bodywork or production of the shell bodywork and painting thereof, to the chosen vehicle or model variant respectively, **characterised in that** the shell platform rear carriage is initially constructed with a spare-wheel well (2) having a closed well base (3) and a spare-wheel retainer (4) secured thereon and, if the shell bodywork is intended for use for vehicles having built-in parts in the well base (3), following production of the shell body, optionally with painting, the well base (3) of the spare-wheel well (2) is provided, in the region of the wheel disc of the spare wheel, with a cut-out (5) and a downwardly open insert pot (6) covering said cut-out is subsequently fastened to an upper spare-wheel retainer (4) on the well base (3).

2. Method according to claim 1, **characterised in that** the shell platform rear carriage is initially constructed with a spare-wheel well (2), the well base (3) of which has a cut-out (5) in the region of the wheel disc of the spare wheel, wherein
- if the shell bodywork is intended for use for vehicles without built-in parts in the well base (3), following production of the shell bodywork, optionally with painting, a planar element (14) covering the cut-out (5) is fastened to an upper spare-wheel retainer (4) on the well base (3) and
- if the shell bodywork is intended for use for vehicles with built-in parts in the well base, following production of the shell bodywork, optionally with painting, a downwardly open insert pot (6) covering the cut-out (5) is fastened to an upper spare-wheel retainer (4) on the well base (3).

3. Method according to claim 1, **characterised in that** the cut-out (5) in the well base (3) of the spare-wheel well (2) is formed using a laser cutting means.

4. Method according to any one of claims 1 and 2, **characterised in that** the planar element (14) or the insert pot (6) is welded, bonded and/or rigidly connected using mechanical connection means (7) to the well base (3) of the spare-wheel well (2).

5. Method according to any one of claims 1 to 4, **characterised in that** an additive or activated carbon filter container (ACF container) (8) is built into the insert pot (6) fastened to the well base (3) in a subsequent method step.

6. Method according to any one of claims 1 to 4, **characterised in that** use is made of an insert pot (6) which, for its part, as a built-in module, has previously been fitted with an additive or activated carbon filter container (ACF container) (8).

7. Method according to any one of claims 1 to 4, **characterised in that** the insert pot (6) used is a built-in module in the form of a correspondingly constructed and fully equipped additive or activated carbon filter container (ACF container) (8) which, for its part, is or becomes provided with an upper spare-wheel retainer (4).

8. Method according to at least one of the preceding claims, **characterised in that** the shell bodywork is zinc-coated prior to painting and at least one cut-out is formed on the shell bodywork using a laser cutting method, the parameters being determined as a function of the material properties of the paintwork in such a way that the heat affected zone is below a threshold value harmful to paintwork regions adjoining the cut-out.

9. Method according to claim 8, **characterised in that** the shell bodywork is partially reshaped in the region of the at least one cut-out.

10. Method according to any one of claims 8 and 9, **characterised in that** the laser cutting process is carried out following the application of a topcoat layer.

11. Method according to at least one of the preceding claims, **characterised in that** the cut-out can be used for fixing constructional elements without further machining of the cut face.

12. Method according to at least one of the preceding claims, **characterised in that** the laser cutting process is carried out in an automated manner.

13. Method according to at least one of the preceding claims, **characterised in that** a laser sublimation process is used.

14. Method according to at least one of the preceding claims, **characterised in that** a laser beam having a laser focus diameter of less than 300 µm is used.

15. Method according to at least one of the preceding claims, **characterised in that** a laser beam having a beam quality of at least 12 mm*mrad is used.

16. Method according to at least one the preceding claims, **characterised in that** an inert gas is supplied to the machining zone during the laser cutting machining process.

17. Shell bodywork for various vehicle or model variants respectively, substantially longitudinal and transverse bearer elements being combined to form a shell platform rear carriage and equipped with a floor panel comprising a spare-wheel well and the aforementioned shell platform rear carriage being subsequently rigidly connected to further bodywork components known per se to form the shell bodywork, **characterised in that** there is formed, on the well base (3) of the spare-wheel well (2) in the region of the wheel disc of the spare wheel, a cut-out (5) with which there is associated a planar element (14) which covers said cut-out and has an upper spare-wheel retainer (4) or a downwardly open insert pot (6) with an upper spare-wheel retainer (4).

18. Shell bodywork according to claim 17, **characterised in that** the planar element (14) or the insert pot (6) is welded, bonded and/or rigidly connected using mechanical connection means (7) to the well base (3) of the spare-wheel well (2).

19. Shell bodywork according to any one of claims 17 and 18, **characterised in that** the insert pot (6) is provided with means for fastening an additive or activated carbon filter container (ACF container) (8).

20. Shell bodywork according to any one of claims 17 to 19, **characterised in that** the insert pot (6) is a built-in module in the form of a correspondingly constructed and fully equipped additive or activated carbon filter container (ACF container) (8) comprising, for its part, an upper spare-wheel retainer (4).

21. Shell bodywork according to any one of claims 17 to 20, **characterised in that** either the cut-out (5) is formed subsequently using a laser cutting means in an initially closed well base (3) or the well base (3) is provided from the outset with a cut-out (5).

## Revendications

1. Procédé de fabrication d'une carrosserie brute pour différentes versions d'un véhicule et/ou d'un modèle, dans lequel après l'achèvement de la carrosserie brute et sa peinture, la carrosserie brute est selon les besoins adaptée à la version de véhicule et/ou de modèle choisie, dans lequel des éléments porteurs sensiblement longitudinaux et transversaux sont réunis pour former une partie arrière de plateforme brute et équipés d'une tôle de plancher comportant un bac de roue de secours, après quoi ladite partie arrière de plateforme brute est assemblée fixement à d'autres éléments de carrosserie en eux-mêmes connus pour former une carrosserie brute, moyennant quoi après l'achèvement de la carrosserie brute ou l'achèvement de la carrosserie brute et sa peinture, la partie arrière de plateforme brute est selon les besoins adaptée à la version de véhicule et/ou de modèle choisie, **caractérisé en ce que** la partie arrière de plateforme brute est tout d'abord réalisée avec un bac de roue de secours (2) comportant un fond de bac (3) fermé sur lequel est disposé fixement un logement de roue de secours (4), et **en ce que** si on envisage d'utiliser la carrosserie brute pour des véhicules comportant des éléments encastrés dans le fond de bac (3), à l'issue de l'achèvement de la carrosserie brute, le cas échéant avec la peinture, le fond de bac (3) du bac de roue de secours (2) dans la zone du disque de roue de la roue de secours est muni d'une découpe (5) et après quoi un récipient rapporté (6) recouvrant cette dernière et ouvert vers le bas, comportant un réceptacle de roue de secours (4) placé dessus, est fixé au fond de bac (3).

2. Procédé selon la revendication 1, **caractérisé en ce que** la partie arrière de plateforme brute est tout d'abord réalisée avec un bac de roue de secours (2) dont le fond de bac (3) présente une découpe (5) dans la zone du disque de roue de la roue de secours, moyennant quoi
- si on envisage d'utiliser la carrosserie brute pour des véhicules sans éléments encastrés dans le fond de bac (3), à l'issue de l'achèvement de la carrosserie brute, le cas échéant avec la peinture, un élément plat (14) recouvrant la découpe (5) et comportant un réceptacle de roue de secours (4) placé dessus est fixé au fond de bac (3) et
- si on envisage d'utiliser la carrosserie brute pour des véhicules comportant des éléments encastrés dans le fond de bac (3), à l'issue de l'achèvement de la carrosserie brute, le cas échéant avec la peinture, un récipient rapporté (6) recouvrant la découpe (5) et ouvert vers le bas, comportant un réceptacle de roue de secours (4) placé dessus, est fixé au fond de bac (3).

3. Procédé selon la revendication 1, **caractérisé en ce que** la découpe (5) est réalisée dans le fond de bac (3) du bac de roue de secours (2) au moyen d'un équipement de coupe au laser.

4. Procédé selon un des revendications 1 et 2, **caractérisé en ce que** l'élément plat (14) ou le récipient rapporté (6) est soudé, collé et/ou assemblé fixement par des moyens d'assemblage mécanique (7) au fond de bac (3) du bac de roue de secours (2).

5. Procédé selon une des revendications 1 à 4, **caractérisé en ce que** dans une étape suivante du procédé, un réservoir d'additif ou de charbon actif de filtrage (réservoir AKF) (8) est intégré dans le récipient rapporté (6) fixé au fond de bac (3).

6. Procédé selon une des revendications 1 à 4, **caractérisé en ce qu'**on utilise un récipient rapporté (6) qui est pour sa part, en tant que module encastré, préalablement équipé d'un réservoir d'additif ou de charbon actif de filtrage (réservoir AKF) (8).

7. Procédé selon une des revendications 1 à 4, **caractérisé en ce qu'**on utilise comme récipient rapporté (6) un module encastré sous la forme d'un réservoir d'additif ou de charbon actif de filtrage (réservoir AKF) (8) réalisé en conséquence et entièrement équipé, qui est pour sa part muni d'un réceptacle de roue de secours (4) placé dessus.

8. Procédé selon au moins une des revendications précédentes, **caractérisé en ce que** la carrosserie brute est galvanisée avant la peinture, et **en ce qu'**au moins une découpe est pratiquée sur la carrosserie brute au moyen d'un procédé de coupe au laser, moyennant quoi les paramètres sont déterminés en fonction des propriétés de matériau de la peinture de telle manière que la zone d'influence de la chaleur se situe au-dessous d'une valeur seuil dommageable pour les parties de la peinture adjacentes à la découpe.

9. Procédé selon la revendication 8, **caractérisé en ce que** la carrosserie brute est partiellement déformée dans la zone de la au moins une découpe.

10. Procédé selon les revendications 8 ou 9, **caractérisé en ce que** le procédé de coupe au laser est mis en oeuvre à l'issue de l'application d'une couche de peinture finale.

11. Procédé selon au moins une des revendications précédentes, **caractérisé en ce que** la découpe peut être utilisée pour la fixation d'éléments de montage sans traitement ultérieur des surfaces de coupe.

12. Procédé selon au moins une des revendications précédentes, **caractérisé en ce que** le procédé de coupe au laser est mis en oeuvre de manière automatisée.

13. Procédé selon au moins une des revendications précédentes, **caractérisé en ce qu'**on utilise un procédé de sublimation laser.

14. Procédé selon au moins une des revendications précédentes, **caractérisé en ce qu'**on utilise un faisceau laser présentant un diamètre de focalisation du laser inférieur à 300 µm.

15. Procédé selon au moins une des revendications précédentes, **caractérisé en ce qu'**on utilise un faisceau laser présentant une qualité du faisceau d'au moins 12 mm*mrad.

16. Procédé selon au moins une des revendications précédentes, **caractérisé en ce qu'**un gaz inerte est amené à la zone de traitement pendant le traitement de coupe au laser.

17. Carrosserie brute pour différentes versions de véhicule et/ou de modèle, dans laquelle des éléments porteurs sensiblement longitudinaux et transversaux sont réunis pour former une partie arrière de plateforme brute et équipés d'une tôle de plancher comportant un bac pour la roue de secours, après quoi ladite partie arrière de plateforme brute est assemblée fixement à d'autres éléments de carrosserie en eux-mêmes connus pour former une carrosserie brute, **caractérisée en ce que** sur le fond de bac (3) du bac de roue de secours (2) dans la zone du disque de roue de la roue de secours est pratiquée une découpe (5) à laquelle est associée un élément plat (14) la recouvrant comportant un réceptacle de roue de secours (4) placé dessus, ou un récipient rapporté (6) ouvert vers le bas comportant un réceptacle de roue de secours (4) placé dessus.

18. Carrosserie brute selon la revendication 17, **caractérisée en ce que** l'élément plat (14) ou le récipient rapporté (6) est soudé, collé et/ou assemblé fixement par des moyens d'assemblage mécanique (7) au fond de bac (3) du bac de roue de secours (2).

19. Carrosserie brute selon une des revendications 17 et 18, **caractérisée en ce que** le récipient rapporté (6) est muni de moyens pour la fixation d'un réservoir d'additif ou de charbon actif de filtrage (réservoir AKF) (8).

20. Carrosserie brute selon une des revendications 17 à 19, **caractérisée en ce que** le récipient rapporté (6) est un module encastré sous la forme d'un réservoir d'additif ou de charbon actif de filtrage (réservoir AKF) (8) réalisé en conséquence et entièrement équipé, qui est pour sa part muni d'un réceptacle de roue de secours (4) placé dessus.

21. Carrosserie brute selon une des revendications 17 à 20, **caractérisée en ce que** soit la découpe (5) est réalisée a posteriori au moyen d'un équipement de coupe au laser dans un fond de bac (3) initialement fermé, soit le fond bac (3) est déjà fourni avec une découpe (5).
